# EUROPÄISCHE PATENTSCHRIFT

(11) **EP 4 408 683 B1**
(45) Veröffentlichungstag und Bekanntmachung des Hinweises auf die Patenterteilung: **22.07.2026**
(21) Anmeldenummer: 22776859.5
(22) Anmeldetag: 26.08.2022
(51) Int. Cl.: B60G 15/06, F16C 19/10, F16C 17/04

(54) **FEDERBEINLAGER MIT EINER KAPPE UND VERFAHREN ZUR HERSTELLUNG**
SUSPENSION STRUT BEARING HAVING A CAP AND PRODUCTION METHOD
PALIER DE JAMBE DE SUSPENSION DOTÉ D'UN CAPOT ET PROCÉDÉ DE PRODUCTION

(30) Priorität: 27.09.2021 DE 102021124865
(43) Veröffentlichungstag der Anmeldung: 07.08.2024
(73) Patentinhaber: Schaeffler Technologies AG & Co. KG, 91074 Herzogenaurach (DE)
(72) Erfinder: STAUTNER, Ralf, 90431 Nürnberg (DE); HAHN, Jürgen, 96152 Burhhaslach (DE); MEYER, Gerhard, 91611 Lehrberg (DE); DUNGS, Jens, 90489 Nürnberg (DE); LUTZ, Rainer, 91459 Markt Erlbach (DE)
(74) Vertreter: Schaeffler Technologies
(86) Internationale Anmeldenummer: PCT/DE2022/100639
(87) Internationale Veröffentlichungsnummer: WO 2023/046227

(56) Entgegenhaltungen:
- WO-A1-2021/018837
- DE-A1- 102020 200 586
- FR-A1- 2 919 909

## Beschreibung

Die Erfindung betrifft ein Federbeinlager für ein Kraftfahrzeug mit einer Kappe, einem Führungsring und einem zwischen der Kappe und dem Führungsring angeordneten Lager. Ferner betrifft die Erfindung auch ein Verfahren zur Herstellung eines Federbeinlagers.

Federbeinlager sind Teil der Radaufhängung bei Einzelradaufhängungen. Die Radaufhängung unterstützt den Fahrkomfort sowie ein leichtes und präzises Lenken der Räder. Insbesondere soll die Radaufhängung Fahrbahngeräusche von der Karosserie des Fahrzeugs fernhalten und möglichst leicht sein. Je nach Ausführung führt das Federbeinlager die Stoßdämpfer-Feder und bildet eine Stützfläche für den Stoßdämpfer-Endanschlag. Das Federbeinlager nimmt die über die Stoßdämpfer-Feder bzw. den Stoßdämpfer übertragenen Radial- und Axialkräfte auf und sorgt dafür, dass sich die Stoßdämpfer-Feder beim Lenken und Einfedern reibungsarm und verspannungsfrei verdrehen kann, um ohne ein Rückstellmoment arbeiteten zu können.

Das Federbeinlager ist in der Regel Teil eines sogenannten McPherson-Federbeins. Dieses Federbein besteht aus einer Feder, Stoßdämpfer und Achsschenkel. Das Federbeinlager umfasst eine Kappe, die an dem karosserieseitigen Federbeindom zur Anlage kommt, sowie einen Führungsring, an dem die Stoßdämpfer-Feder abgestützt ist und durch diesen geführt wird. Der Führungsring ist gegenüber der Kappe mittels Lager drehbar gelagert. Das Lager ermöglicht beim Lenken ein Drehen der Feder gegenüber der Karosserie, da sich bei Lenkbewegungen das gesamte Federbein dreht.

Beispielsweise offenbart die DE 10 2014 206 658 B4 ein Federbeinlager mit einer Kappe und mit einem gegenüber der Kappe um eine Drehachse drehbar gelagerten Führungsring. Zwischen der Kappe und dem Führungsring ist ein Axiallager angeordnet. Die Kappe umfasst eine Weichkomponente und eine Hartkomponente, wobei die Weichkomponente mindestens zwei umlaufende Dichtlippen aufweist, die zur Abdichtung des Axiallagers schleifend an dem Führungsring anliegen. Eine am Domlager zur Anlage kommende Stirnfläche der Hartkomponente umfasst ein Profil, wobei dieses Profil eine geschlossene Rippenstruktur aufweist.

Durch die geschlossene Rippenstruktur wird an der Kappe eine Vielzahl von Hohlräumen ausgebildet, wobei diese Hohlräume fertigungsbedingt eine einzige Öffnung aufweisen, nämlich die Öffnung, durch die das Werkzeug bei der Herstellung herausgezogen wird. Mit anderen Worten taucht das Werkzeug bei der Herstellung der Rippenstruktur in die auszubildenden Hohlräume ein und formt beim axialen Herausziehen die geschlossene Rippenstruktur. Das Werkzeug umfasst eine Vielzahl von filigranen, insbesondere stiftähnlichen Formteilen, die zur Ausbildung der geschlossenen Rippenstruktur eingerichtet sind. Die Kühlung des Werkzeugs ist aufgrund der filigranen Formteile aufwendig und zeitintensiv, wobei die filigranen Formteile aufgrund ihrer filigranen Strukturen empfindlich sind und leicht beschädigt werden können.

Das Dokument DE 10 2020 200586 A1 offenbart ein Federbeinlager gemäß dem Oberbegriff des Anspruchs 1.

Die Dokumente WO 2021/018837 A1 und FR 2 919 909 A1 offenbaren andere Federbeinlager.

Die Aufgabe der vorliegenden Erfindung besteht darin, eine Federbeinlager zu schaffen, das besonders schnell und günstig herstellbar ist. Insbesondere soll ein Verfahren zur Herstellung des Federbeinlagers verbessert werden.

Diese Aufgaben werden durch ein Federbeinlager mit den Merkmalen des Anspruchs 1 und ein Verfahren mit den Merkmalen von Anspruch 8 gelöst. Bevorzugte oder vorteilhafte Ausführungsformen der Erfindung ergeben sich aus den Unteransprüchen der nachfolgenden Beschreibung sowie den beigefügten Figuren.

Ein erfindungsgemäßes Federbeinlager für ein Kraftfahrzeug umfasst eine Kappe und ein gegenüber der Kappe um eine Drehachse drehbar gelagerten Führungsring, wobei zwischen der Kappe und dem Führungsring ein Lager angeordnet ist, wobei die Kappe an einer zur Karosserie des Kraftfahrzeugs ausrichtbaren Stirnfläche ein Profil mit einer in radialer Richtung offenen Rippenstruktur aufweist. Unter einer in radialer Richtung offenen Rippenstruktur ist zu verstehen, dass die Rippenstruktur keine Taschen oder Hohlräume aufweist, die nur eine Öffnung oder keine Öffnung haben. Mit anderen Worten ist die in radialer Richtung offene Rippenstruktur des Profils nicht nur durch eine axiale Entformung eines Herstellungswerkzeugs, sondern auch durch eine radiale Entformung des Herstellungswerkzeugs herstellbar, da eine Wandung an der Rippenstruktur in radialer Richtung fehlt.

Durch die in radialer Richtung offene Rippenstruktur lässt sich insbesondere das Herstellungswerkzeug optimiert gestalten. Beispielsweise können die Formteile des Herstellungswerkzeugs, die die Rippenstruktur formen, massiver ausgebildet werden, wobei insbesondere Stand- und Zykluszeiten aufgrund einer daraus erwachsenden verbesserten Kühlung und kürzerer Abkühlzeiten verbessert werden. Ferner wird weniger Material zur Ausbildung der Kappe benötigt, da der in radialer Richtung offenen Rippenstruktur die Wandung in radialer Richtung fehlt, die den Hohlraum in radialer Richtung begrenzen würde. Daraus ergibt sich insbesondere auch eine Kosteneinsparung. Ein weiterer Vorteil der offenen Rippenstruktur gegenüber einer geschlossenen Rippenstruktur ist die Möglichkeit eines Abfließens von Spritzwasser. Dadurch, dass keine Hohlräume ausgebildet werden, die nur zu einer Seite hin offen sind, kann sich Spritzwasser nicht ansammeln, sondern direkt in radialer Richtung abfließen, wodurch insbesondere das Lager vor Korrosion geschützt wird. Vorzugsweise ist das Lager als Kugellager oder Gleitlager ausgebildet.

Erfindungsgemäß das Profil der offenen Rippenstruktur aus mehreren Stegen ausgebildet, wobei mindestens ein erster Steg zumindest teilweise in Umfangsrichtung an der Kappe ausgebildet ist, und wobei mindestens ein zweiter Steg zumindest teilweise in radialer Richtung an der Kappe ausgebildet ist. Unter einem Steg ist eine Wandung oder eine Rippe zu verstehen, die aus demselben Material wie die Kappe ausgebildet ist und einteilig mit der Kappe verbunden ist. Insbesondere können mehrere Stege einteilig miteinander verbunden sein. Bevorzugt erstrecken sich die Stege des Profils von der zur Karosserie des Kraftfahrzeugs ausrichtbaren Stirnfläche der Kappe in axialer Richtung. Mit anderen Worten sind die Stege des Profils als Erhebungen an der zur Karosserie des Kraftfahrzeugs gerichteten Stirnfläche der Kappe ausgebildet. Über die Stege der Rippenstruktur erfolgt eine vorteilhafte Kraftübertagung der in das Federbeinlager eingeleiteten Federkräfte in das Domlager an der Karosserie.

Gemäß einer bevorzugten Ausführungsform ist der erste Steg umlaufend in Umfangsrichtung an der Kappe ausgebildet, wobei mehrere zweite Stege von dem umlaufenden ersten Steg strahlenförmig radial nach innen ausgebildet sind. Mithin ist der erste Steg in Umfangsrichtung geschlossen ausgebildet und weist somit keine Enden auf. Mehrere zweite Stege erstrecken sich beginnend an dem umlaufenden ersten Steg strahlenförmig radial nach innen. Vorzugsweise sind die zweiten Stege im Wesentlichen gleichmäßig am ersten Steg verteilt ausgebildet. Durch den umlaufenden ersten Steg und den strahlenförmig radial nach innen ausgebildeten zweiten Stegen erfolgt eine vorteilhafte Kraftübertagung der in das Federbeinlager eingeleiteten Federkräfte in das Domlager an der Karosserie.

Gemäß einer weiteren bevorzugten Ausführungsform ist der erste Steg umlaufend in Umfangsrichtung an der Kappe ausgebildet, wobei mehrere zweite Stege von dem umlaufenden ersten Steg strahlenförmig radial nach außen ausgebildet sind. Somit erstrecken sich mehrere zweite Stege beginnend an dem umlaufenden ersten Steg strahlenförmig radial nach außen. Vorzugsweise sind die zweiten Stege im Wesentlichen gleichmäßig am ersten Steg verteilt ausgebildet. Durch den umlaufenden ersten Steg und den strahlenförmig radial nach außen ausgebildeten zweiten Stegen erfolgt eine vorteilhafte Kraftübertagung der in das Federbeinlager eingeleiteten Federkräfte in das Domlager an der Karosserie.

Gemäß einer weiteren bevorzugten Ausführungsform ist der erste Steg umlaufend in Umfangsrichtung an der Kappe ausgebildet, wobei mehrere zweite Stege von dem umlaufenden ersten Steg strahlenförmig sowohl radial nach innen als auch radial nach außen ausgebildet sind. Somit erstrecken sich mehrere zweite Stege beginnend an dem umlaufenden ersten Steg strahlenförmig sowohl radial nach innen als auch radial nach außen. Vorzugsweise sind die zweiten Stege im Wesentlichen gleichmäßig am ersten Steg verteilt ausgebildet. Durch den umlaufenden ersten Steg und den strahlenförmig radial nach innen und außen ausgebildeten zweiten Stegen erfolgt eine vorteilhafte Kraftübertagung der in das Federbeinlager eingeleiteten Federkräfte in das Domlager an der Karosserie.

Erfindungsgemäß ist der umlaufende erste Steg mäanderförmig an der Kappe ausgebildet. Beispielsweise ist der umlaufende erste Steg im Wesentlichen gleichmäßig mäanderförmig an der Kappe ausgebildet. Insbesondere ist ein einziger umlaufender erster Steg mäanderförmig an der Kappe ausgebildet. Mithin umfasst der erste Steg erste Abschnitte, die sich in Umfangsrichtung der Kappe erstrecken, und zweite Abschnitte, die sich in radialer Richtung, insbesondere im Wesentlichen quer zu den in Umfangsrichtung ausgebildeten ersten Abschnitten erstrecken.

Bevorzugt bildet zumindest der mäanderförmig umlaufende erste Steg eine stirnseitige Anlagefläche zur axialen Anlage an die Karosserie des Kraftfahrzeugs aus. Mit anderen Worten dient die stirnseitige Anlagefläche des mäanderförmig umlaufenden ersten Stegs allein als Anlagefläche der Kappe an der Karosserie des Fahrzeugs. Alternativ kann die stirnseitige Anlagefläche des mäanderförmig umlaufenden ersten Stegs zusammen mit anderen stirnseitigen Anlageflächen an den zweiten Stegen als Anlagefläche der Kappe an der Karosserie des Fahrzeugs dienen. Dadurch lässt sich eine optimale Anlage des Federbeinlagers an das Domlager realisieren.

Gemäß einer weiteren bevorzugten Ausführungsform ist der umlaufende erste Steg rundlich an der Kappe ausgebildet. Unter einer rundlichen Ausformung des umlaufenden Stegs ist eine kreisrunde oder elliptische Ausformung des Stegs an der Kappe zu verstehen. Bevorzugt ist ein einziger umlaufender erster Steg kreisrund oder elliptisch an der Kappe ausgebildet. Mithin weist der kreisrund oder elliptisch ausgebildete erste Steg eine Innenumfangsfläche und eine Außenumfangsfläche auf, wobei sich die zweiten Stege beginnend an der jeweiligen Umfangsfläche des ersten Steges radial nach innen oder radial nach außen erstrecken können.

Vorzugsweise ist die Kappe zumindest teilweise oder vollständig aus einem Polyamidwerkstoff ausgebildet. Mit anderen Worten kann die Kappe entweder aus einer einzigen Komponente, nämlich aus dem als Hartkomponente vorgesehenen Polyamidwerkstoff, oder aus mindestens zwei Komponenten, beispielsweise aus einer Weichkomponente wie thermoplastischer Polyurethan und dem als Hartkomponente vorgesehenen Polyamidwerkstoff, ausgebildet sein. Der Polyamidwerkstoff ist aufgrund seiner Steifigkeit besonders gut zur Aufnahme von Kräften geeignet und der thermoplastischer Polyurethan ist aufgrund seiner Elastizität besonders gut zur Abdichtung geeignet.

Bei einem erfindungsgemäßen Verfahren zur Herstellung eines erfindungsgemäßen Federbeinlagers wird die in radialer Richtung offene Rippenstruktur des Profils an der Kappe des Federbeinlagers durch axiale und/oder radiale Entformung mindestens eines Werkzeugs ausgebildet. Insbesondere können die Formteile des Werkzeugs durch die offene Rippenstruktur massiver ausgebildet werden, wodurch die Herstellungsdauer verkürzt wird und Material sowie Kosten eingespart werden.

Weitere die Erfindung verbessernde Maßnahmen werden nachstehend gemeinsam mit der Beschreibung bevorzugter Ausführungsbeispiele der Erfindung anhand der Figuren näher dargestellt, wobei gleiche Bauteile oder Elemente mit dem gleichen Bezugszeichen versehen sind. Dabei zeigt
- Figur 1: eine stark vereinfachte Schnittdarstellung eines erfindungsgemäßen Federbeinlagers,
- Figur 2: eine vereinfachte Perspektivdarstellung einer Kappe des erfindungsgemäßen Federbeinlagers nach einem ersten Ausführungsbeispiel,
- Figur 3: eine vereinfachte Draufsicht der Kappe des erfindungsgemäßen Federbeinlagers nach Figur 2,
- Figur 4: eine vereinfachte Draufsicht der Kappe eines nicht beanspruchten Beispiels,
- Figur 5: eine vereinfachte Draufsicht der Kappe eines nicht beanspruchten Beispiels,
- Figur 6: eine vereinfachte Draufsicht der Kappe eines nicht beanspruchten Beispiels.

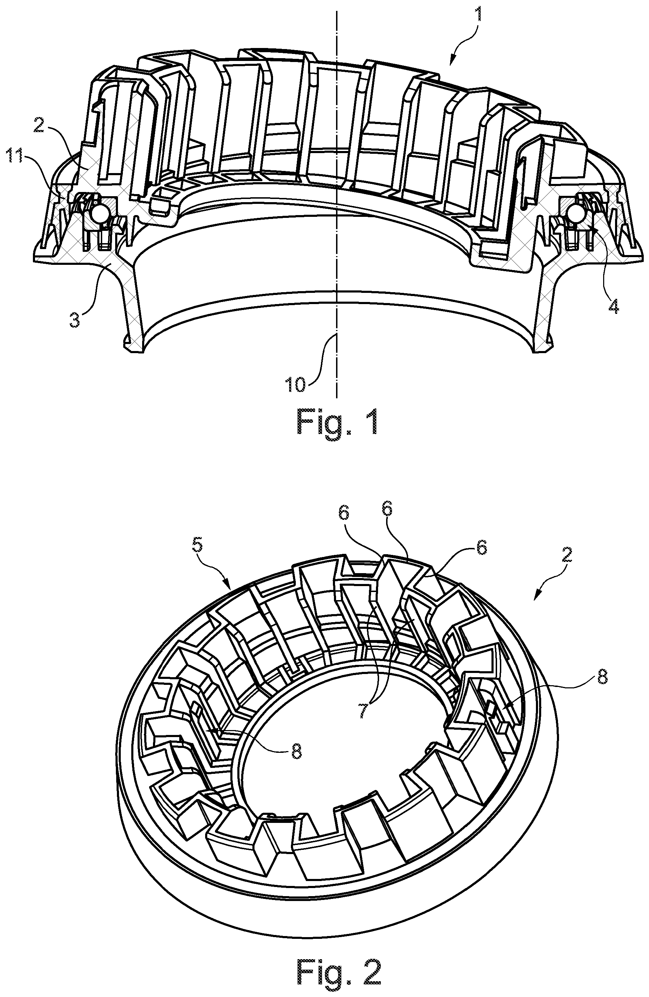

Gemäß Figur 1 weist ein erfindungsgemäßes Federbeinlager 1 für ein - nicht näher dargestelltes - Kraftfahrzeug eine Kappe 2, einen Führungsring 3 und ein zwischen der Kappe 2 und dem Führungsring 3 angeordnetes Lager 4. Der Führungsring 3 ist gegenüber der Kappe 2 um eine Drehachse 10 drehbar gelagert und kann sich somit relativ zur Kappe 2 verdrehen. Die Kappe 2 ist dazu eingerichtet, mit einer Stirnfläche, die von dem Führungsring 3 abgewandt ist, an einer Karosserie des Fahrzeugs positionsfest zur Anlage zu kommen. Ferner ist die Kappe 2 aus einem Polyamidwerkstoff ausgebildet, um die in das Federbeinlager 1 eingeleitete Federkräfte an dem Domlager der Karosserie abzustützen. Das Lager 4 ist als Axialkugellager ausgebildet und mittels einer Dichtung 11 abgedichtet, wobei die Dichtung 11 an der Kappe 2 ausgebildet ist und umlaufend an dem Führungsring 3 zur Anlage kommt. Alternativ kann das Lager 4 auch als Gleitlager ausgebildet sein.

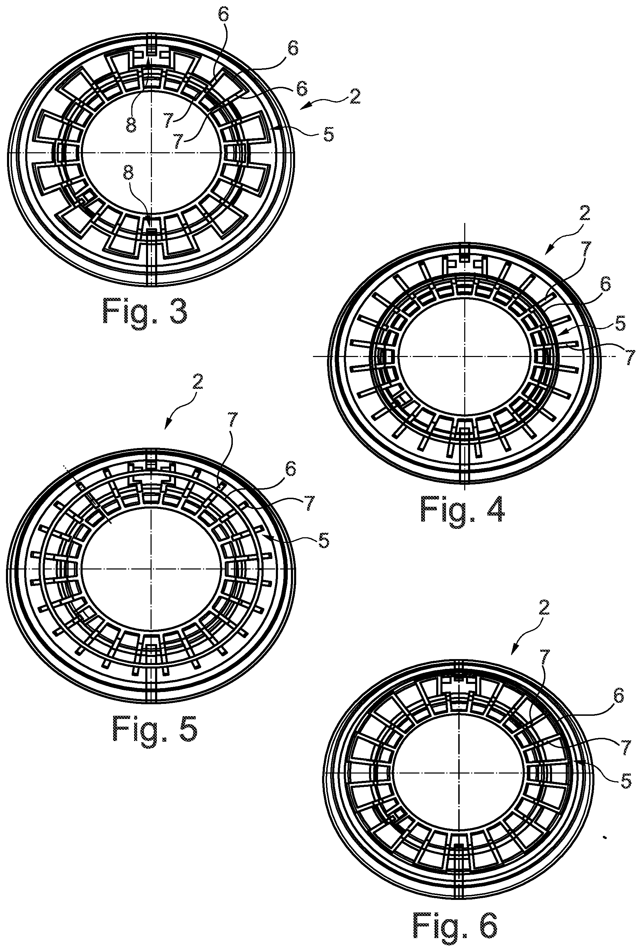

Figur 2 zeigt die Kappe 2 aus Figur 1 in einer perspektivischen Darstellung. Ferner zeigt Figur 3 die Kappe 2 aus Figur 1 in einer Draufsicht. Gemäß Figur 2 und Figur 3 weist die Kappe 2 an einer zur Karosserie des Kraftfahrzeugs gerichteten Stirnfläche ein Profil 5 mit einer in radialer Richtung offenen Rippenstruktur auf. Das Profil 5 der offenen Rippenstruktur ist aus einem ersten Steg 6 und mehreren zweiten Stegen 7 ausgebildet. Die Stege 6, 7 des Profils 5 erstrecken sich wie Erhebungen von der Stirnfläche der Kappe 2, die zur Karosserie des Kraftfahrzeugs gerichtet ist, in axialer Richtung. Ferner sind an der zur Karosserie des Kraftfahrzeugs gerichteten Stirnfläche der Kappe 2 mehrere Verbindungsmittel 8 in axialer Richtung ausgebildet, wobei diese Verbindungsmittel 8 zur Verbindung der Kappe 2 mit dem Domlager an der Karosserie eingerichtet und zwischen der offenen Rippenstruktur angeordnet sind. Der erste Steg 6 ist mäanderförmig umlaufend in Umfangsrichtung an der Stirnfläche der Kappe 2 ausgebildet, wobei mehrere zweite Stege 7 von dem umlaufenden ersten Steg 6 strahlenförmig radial nach innen ausgebildet sind. Vorliegend bildet der mäanderförmig umlaufende erste Steg 6 eine stirnseitige Anlagefläche zur axialen Anlage an die Karosserie des Kraftfahrzeugs aus. Die zweiten Stege 7 sind im Wesentlichen zur radialen Anlage an die Karosserie des Kraftfahrzeugs ausgebildet.

Figur 4 zeigt ein nicht beanspruchtes Beispiel der Kappe 2 gemäß einer Draufsicht, wobei dieses Beispiel gegenüber der ersten Ausführungsform lediglich ein anderes Profil 5 für die offene Rippenstruktur aufweist. Das Profil 5 der offenen Rippenstruktur ist aus einem ersten Steg 6 und mehreren zweiten Stegen 7 ausgebildet, wobei der erste Steg 6 rundlich umlaufend in Umfangsrichtung an der Stirnfläche der Kappe 2 ausgebildet ist, und wobei mehrere zweite Stege 7 von dem rundlich umlaufenden ersten Steg 6 strahlenförmig radial nach außen ausgebildet sind. Vorliegend bildet der rundliche umlaufende erste Steg 6 zusammen mit den zweiten Stegen 7 eine stirnseitige Anlagefläche zur axialen Anlage an die Karosserie des Kraftfahrzeugs aus. Die zweiten Stege 7 sind ferner zur radialen Anlage an die Karosserie des Kraftfahrzeugs ausgebildet.

Figur 5 zeigt ein nicht beanspruchtes Beispiel der Kappe 2 gemäß einer Draufsicht, wobei dieses Beispiel gegenüber der ersten Ausführungsform lediglich ein anderes Profil 5 für die Rippenstruktur aufweist. Das Profil 5 der offenen Rippenstruktur ist aus einem ersten Steg 6 und mehreren zweiten Stegen 7 ausgebildet, wobei der erste Steg 6 rundlich umlaufend in Umfangsrichtung an der Stirnfläche der Kappe 2 ausgebildet ist, und wobei mehrere zweite Stege 7 von dem rundlich umlaufenden ersten Steg 6 strahlenförmig radial nach innen und außen ausgebildet sind. Vorliegend bildet der rundliche umlaufende erste Steg 6 zusammen mit den zweiten Stegen 7 eine stirnseitige Anlagefläche zur axialen Anlage an die Karosserie des Kraftfahrzeugs aus. Die zweiten Stege 7 sind ferner zur radialen Anlage an die Karosserie des Kraftfahrzeugs ausgebildet.

Figur 6 zeigt ein nicht beanspruchtes Beispiel der Kappe 2 gemäß einer Draufsicht, wobei dieses Beispiel gegenüber der ersten Ausführungsform lediglich ein anderes Profil 5 für die offene Rippenstruktur aufweist. Das Profil 5 der offenen Rippenstruktur ist aus einem ersten Steg 6 und mehreren zweiten Stegen 7 ausgebildet, wobei der erste Steg 6 rundlich umlaufend in Umfangsrichtung an der Stirnfläche der Kappe 2 ausgebildet ist, und wobei mehrere zweite Stege 7 von dem umlaufenden ersten Steg 6 strahlenförmig radial nach innen ausgebildet sind. Vorliegend bildet der rundliche umlaufende erste Steg 6 zusammen mit den zweiten Stegen 7 eine stirnseitige Anlagefläche zur axialen Anlage an die Karosserie des Kraftfahrzeugs aus. Die zweiten Stege 7 sind ferner auch zur radialen Anlage an die Karosserie des Kraftfahrzeugs ausgebildet.

Gemäß allen Ausführungsformen ist das Profil 5 der in radialer Richtung offenen Rippenstruktur derart gestaltetet, dass Wandungen, die einen Hohlraum in radialer Richtung begrenzen würden, entfallen. Dadurch weist das Profil 5 keine umfangsseitig in sich geschlossenen Taschen oder Hohlräume auf. Dadurch ist zu der axialen Entformung eines Herstellungswerkzeugs auch eine radiale Entformung des Herstellungswerkzeugs bei der Herstellung des Profils 5 möglich. Dies ermöglicht eine optimierte Gestaltung des Herstellungswerkzeugs, insbesondere der Formteile des Herstellungswerkzeugs, die die Rippenstruktur des Profils 5 ausformen. Insbesondere können diese Formteile massiver ausgebildet werden, wobei die Kühlung der Formteile effizienter gestaltet werden kann, um eine Abwärme bei der Herstellung besser abzuführen. Ferner wird weniger Material zur Ausbildung der Kappe benötigt, da der in radialer Richtung offenen Rippenstruktur die Wandung in radialer Richtung fehlt. Durch die offene Rippenstruktur wird auch ein radiales Abfließens von Spritzwasser ermöglicht.

### Bezugszeichenliste

- 1: Federbeinlager
- 2: Kappe
- 3: Führungsring
- 4: Lager
- 5: Profil
- 6: Steg
- 7: Steg
- 8: Verbindungsmittel
- 10: Drehachse
- 11: Dichtung

## Patentansprüche

1. Federbeinlager (1) für ein Kraftfahrzeug, umfassend eine Kappe (2) und ein gegenüber der Kappe (2) um eine Drehachse (10) drehbar gelagerten Führungsring (3), wobei zwischen der Kappe (2) und dem Führungsring (3) ein Lager (4) angeordnet ist, wobei die Kappe (2) an einer zur Karosserie des Kraftfahrzeugs ausrichtbaren Stirnfläche ein Profil (5) mit einer in radialer Richtung offenen Rippenstruktur aufweist, wobei das Profil (5) der offenen Rippenstruktur aus mehreren Stegen (6, 7) ausgebildet ist, wobei mindestens ein erster Steg (6) zumindest teilweise in Umfangsrichtung an der Kappe (2) ausgebildet ist, und wobei mindestens ein zweiter Steg (7) zumindest teilweise in radialer Richtung an der Kappe (2) ausgebildet ist,
**dadurch gekennzeichnet, dass**
der umlaufende erste Steg (6) mäanderförmig an der Kappe (2) ausgebildet ist.

2. Federbeinlager (1) nach Anspruch 1,
**dadurch gekennzeichnet, dass** sich die Stege (6, 7) des Profils (5) von der zur Karosserie des Kraftfahrzeugs ausrichtbaren Stirnfläche der Kappe (2) in axialer Richtung erstrecken.

3. Federbeinlager (1) nach einem der vorangehenden Ansprüche,
**dadurch gekennzeichnet, dass** der erste Steg (6) umlaufend in Umfangsrichtung an der Kappe (2) ausgebildet ist, wobei mehrere zweite Stege (7) von dem umlaufenden ersten Steg (6) strahlenförmig radial nach innen ausgebildet sind.

4. Federbeinlager (1) nach einem der vorangehenden Ansprüche,
**dadurch gekennzeichnet, dass** der erste Steg (6) umlaufend in Umfangsrichtung an der Kappe (2) ausgebildet ist, wobei mehrere zweite Stege (7) von dem umlaufenden ersten Steg (6) strahlenförmig radial nach außen ausgebildet sind.

5. Federbeinlager (1) nach einem der vorangehenden Ansprüche,
**dadurch gekennzeichnet, dass** zumindest der mäanderförmig umlaufende erste Steg (6) eine stirnseitige Anlagefläche zur axialen Anlage an die Karosserie des Kraftfahrzeugs ausbildet.

6. Federbeinlager (1) nach einem der vorangehenden Ansprüche,
**dadurch gekennzeichnet, dass** der umlaufende erste Steg (6) kreisrund an der Kappe (2) ausgebildet ist.

7. Federbeinlager (1) nach einem der vorangehenden Ansprüche,
**dadurch gekennzeichnet, dass** die Kappe (2) zumindest teilweise oder vollständig aus einem Polyamidwerkstoff ausgebildet ist.

8. Verfahren zur Herstellung eines Federbeinlagers (1) nach einem der Ansprüche 1 bis 7, wobei die in radialer Richtung offene Rippenstruktur des Profils (5) an der Kappe (2) des Federbeinlagers (1) durch axiale und/oder radiale Entformung mindestens eines Werkzeugs ausgebildet wird.

## Claims

1. A suspension strut bearing (1) for a motor vehicle, comprising a cap (2) and a guide ring (3) rotatably mounted relative to the cap (2) about an axis of rotation (10), wherein a bearing (4) is arranged between the cap (2) and the guide ring (3), wherein the cap (2) has a profile (5) with a rib structure open in a radial direction on a front face directed towards a body of the motor vehicle, wherein the profile (5) of the open rib structure is formed from a plurality of webs (6, 7), wherein at least one first web (6) is formed at least partially in a circumferential direction on the cap (2), and wherein at least one second web (7) is formed at least partially in the radial direction on the cap (2), **characterised in that** the circumferential first web (6) is formed on the cap (2) in a meandering manner.

2. The suspension strut bearing (1) according to claim 1,
**characterised in that** the webs (6, 7) of the profile (5) extend in the axial direction from the front face of the cap (2) directed towards the body of the motor vehicle.

3. The suspension strut bearing (1) according to any one of the preceding claims,
**characterised in that** the first web (6) is formed circumferentially on the cap (2) in the circumferential direction, wherein a plurality of second webs (7) are formed radially inwards from the circumferential first web (6).

4. The suspension strut bearing (1) according to any one of the preceding claims,
**characterised in that** the first web (6) is formed circumferentially on the cap (2) in the circumferential direction, wherein a plurality of second webs (7) are formed radially outwards from the circumferential first web (6).

5. The suspension strut bearing (1) according to any one of the preceding claims,
**characterised in that** at least the meandering first web (6) forms an end-face contact surface for axial contact with the body of the motor vehicle.

6. The suspension strut bearing (1) according to any one of the preceding claims,
**characterised in that** the circumferential first web (6) is formed on the cap (2) in a circular manner.

7. The suspension strut bearing (1) according to any one of the preceding claims,
**characterised in that** the cap (2) is formed at least partially or completely from a polyamide material.

8. A method for producing a suspension strut bearing (1) according to any one of claims 1 to 7, wherein the rib structure of the profile (5) open in the radial direction is formed on the cap (2) of the suspension strut bearing (1) by axial and/or radial demoulding of at least one tool.

## Revendications

1. Palier de jambe de force (1) pour véhicule automobile, comprenant un capuchon (2) et une bague de guidage (3) montée en rotation par rapport au capuchon (2) autour d'un axe de rotation (10), dans lequel un palier (4) est disposé entre le capuchon (2) et la bague de guidage (3), dans lequel le capuchon (2) présente un profil (5) doté d'une structure de nervures radialement ouvertes sur une face frontale qui peut être alignée avec la carrosserie du véhicule automobile, le profil (5) de la structure de nervures ouvertes étant constitué de plusieurs éléments de liaison (6, 7), au moins un élément de liaison (6) étant formé au moins à certains endroits dans la direction circonférentielle sur le capuchon (2), et au moins un deuxième élément de liaison (7) étant formé au moins à certains endroits dans la direction radiale sur le capuchon (2), **caractérisé en ce que** le premier élément de liaison circonférentiel (6) est réalisé sous forme sinueuse sur le capuchon (2).

2. Palier de jambe de force (1) selon la revendication 1,
**caractérisé en ce que** les éléments de liaison (6, 7) du profil (5) s'étendent dans la direction axiale à partir de la face frontale du capuchon (2) qui peut être alignée avec la carrosserie du véhicule automobile.

3. Palier de jambe de force (1) selon l'une quelconque des revendications précédentes,
**caractérisé en ce que** le premier élément de liaison (6) est formé dans la direction circonférentielle sur le capuchon (2), plusieurs deuxièmes éléments de liaison (7) étant formés radialement vers l'intérieur à partir du premier élément de liaison circonférentiel (6).

4. Palier de jambe de force (1) selon l'une quelconque des revendications précédentes,
**caractérisé en ce que** le premier élément de liaison (6) est formé circonférentiellement sur le capuchon (2), plusieurs deuxièmes éléments de liaison (7) étant formés radialement vers l'extérieur à partir du premier élément de liaison circonférentiel (6).

5. Palier de jambe de force (1) selon l'une quelconque des revendications précédentes,
**caractérisé en ce qu'**au moins le premier élément de liaison (6) en méandres forme une surface de contact côté face frontale pour un contact axial avec la carrosserie du véhicule automobile.

6. Palier de jambe de force (1) selon l'une quelconque des revendications précédentes,
**caractérisé en ce que** le premier élément de liaison circonférentielle (6) est formé circulairement sur le capuchon (2).

7. Palier de jambe de force (1) selon l'une quelconque des revendications précédentes,
**caractérisé en ce que** le capuchon (2) est formé au moins partiellement ou entièrement d'un matériau polyamide.

8. Procédé de fabrication d'un palier de jambe de force (1) selon l'une quelconque des revendications 1 à 7, dans lequel la structure de nervures radialement ouvertes du profil (5) sur le capuchon (2) du palier de jambe de force (1) est formée par démoulage axial et/ou radial d'au moins un outil.
